# EUROPEAN PATENT SPECIFICATION

(11) **EP 1 992 598 B1**
(45) Date of publication and mention of the grant of the patent: **08.11.2017**
(21) Application number: 07023027.1
(22) Date of filing: 28.11.2007
(51) Int. Cl.: C04B 35/465

(54) **Microwave dielectric ceramic**
Dielektrische Mikrowellenkeramikzusammensetzung
Céramique diélectrique à micro-ondes

(30) Priority: 08.01.2007 GB 0700265
(43) Date of publication of application: 19.11.2008
(73) Proprietor: Intel Corporation, Santa Clara, CA 95054 (US)
(72) Inventor: Iddles, David Martin, Shrewsbury, SY3 8UE (GB); Muir, Duncan, Sandbach,CW11 3NP (GB); Price, Timothy James, Market Drayton, TF9 3JQ (GB)
(74) Representative: Goddar, Heinz J.

(56) References cited:
- EP-A- 1 160 221
- EP-A- 1 341 189
- US-A1- 2002 155 942
- US-A1- 2005 288 172
- US-A1- 2006 139 845
- DATABASE WPI Section Ch, Week 199518 Thomson Scientific, London, GB; Class L03, AN 1995-134210 XP002493119 TAKEUCHI H: "Dielectric porcelain composition" -& JP 07 057537 A (ALPS ELECTRIC CO LTD) 3 March 1995 (1995-03-03)

## Description

The following description relates to a dielectric ceramic material and also to a dielectric resonator comprising the novel ceramic material, the resonator being particularly useful for microwave application.

According to the description there is provided a dielectric ceramic material with a composition of Formula (1)

x CaTiO₃ + (1-x) Sm_{z}Re_{(1-z)}>AlO₃ (1)

wherein 0.5 < x < 0.9
0.3 < z < 0.995
Re may be selected from a group consisting of La, Nd, Pr, Dy, Gd, Y, Er, Ho and mixtures thereof.

Materials in accordance with the description find application in microwave base station filters (single and multimode). Preferred materials may be prepared which allow changes to relative permittivity εᵣ and TCf values while retaining Q values >10,000 at 2 GHz suitable for their intended applications. Materials of the description may yield superior dielectric loss characteristics in comparison to prior art compositions. They are also relatively economical to manufacture.

Preferred materials in accordance with the description possess high relative permittivity values in comparison to known materials with equivalent Q values. Particularly preferred materials have εᵣ of 40-50, Q>10000 at 2 GHz (Qf>20000 GHz) and TCf between -20 to +20 MK⁻¹.

Materials in accordance with the description possess further advantages in relation to materials disclosed in the prior art, for example US-A-5356844, because the ceramics of this description have an improved microwave quality factor at ambient and higher operating temperatures.

Further prior art may be found in EP 1 341 189 A, US 2005/288172 A1, US 2002/155942 A1, EP 1 160 221 A, US 2006/139845 A1 or in TAKEUCHI H, "Dielectric porcelain composition", 1995.

In particular, EP 1 341 189 A relates to a microwave dielectric ceramic composition exhibiting favorable dielectric characteristics, including high Qu, and to a dielectric resonator which exhibits high Qu even when of large size. The microwave dielectric ceramic composition contains a primary component represented by CaTiO₃-(1-x)REAlO₃ [0.54 ≤ x ≤ 0.82] (wherein RE is composed only of an essential element La or composed of an essential element La and one or two optional elements selected from among Nd and Sm). Also provided is a microwave dielectric ceramic composition containing a primary component represented by the compositional formula: xCaTiO₃-(1-x)LnAlO₃ [0.54 ≤ x ≤ 0.82] (wherein Ln is at least one species selected from among Y, La, Nd, Sm, etc.), and Na in an amount as reduced to Na₂O of 0.02 to 0.5 parts by mass on the basis of 100 parts by mass of the primary component. Also provided is a dielectric resonator produced from the aforementioned microwave dielectric ceramic composition.

Moreover, US 2005/288172 A1 teaches a dielectric ceramic composition obtained by firing a mixture containing a glass component and a dielectric component represented by the compositional formula a.Li₂O-b.(CaO₁₋ₓ-SrOₓ)-c.R₂O₃-d.TiO₂ (wherein x satisfies 0<=x<1, and R is at least one selected from La, Y and other rare-earth metals, and a, b, c and d satisfy 0<=a<=20 mol %, 0<=b<=45 mol %, 0<c<=20 mol %, 40<=d<=80 mol % and a+b+c+d=100 mol %). The dielectric component is prepared by calcining a raw material. The glass component contains at least a bismuth glass. After the firing, a ratio (second phase/first phase) in X-ray diffraction peak intensity of the second phase containing the rare-earth element to the first phase having a perovskite structure, as a main phase, does not exceed 20%.

Furthermore, US 2002/155942 A1 teaches a dielectric porcelain which comprises a polycrystalline material of which a main component comprises oxides containing at least a rare earth element (Ln), Al, M (M represents Ca and/or Sr) and Ti as metal elements, wherein the thickness of a grain boundary layer is 20 nm or less, thereby achieving a high value of εᵣ, high Q factor and small absolute value of the temperature coefficient of resonant frequency in a high frequency region. The dielectric porcelain is to be used in dielectric resonators.

Materials in accordance with the present invention consist essentially of a composition of Formula 2

x CaTi_{1.03}O₃ + (1-x) Sm_{0.95}Y_{(0.0)}AlO₃ (2)

wherein 0.65 ≤ x ≤ 0.72
or a composition of Formula 3

x CaTi_{1.03}O₃ + (1-x) Sm_{0.8}Y_{(0.2)}AlO₃ (3)

wherein 0.65 ≤ x ≤ 0.72

A dopant may be selected from CeO₂, Fe₂0₃, MnO₂, Nb₂O₅, Ta₂O₅, Ga₂O₃ and mixtures thereof. The dopant may be present in an amount of about 20 to about 5000ppm, more preferably about 20 to about 1000ppm.

CeO₂ where present may be added as a dopant in the range about 50 ppm to about 2.0 wt%.

The Ca, Al, Ti or Re site occupancies may all be varied by +/-10%.

The electrical properties for these ceramics can be summarised as follows:
εᵣ 40-50
Q (2 GHz) > 10000
TCf (variable through composition) -10 to +10 MK⁻¹

Compositions of the present invention may be manufactured by mixing the appropriate oxides, carbonates or oxalates or mixtures thereof in the above mentioned proportions, pulverising the mixture using a wet or dry method, calcining the mixture at a temperature of 1100°C to 1400°C for 1 to 16 hours, shaping the calcined mixture into an optional form and sintering the shaped body at a temperature of 1400°C to 1700°C.

Percentages and other amounts referred to in this specification are by weight unless indicated otherwise. Percentages and other proportions are selected from the ranges specified to total 100%.

The invention is further described by means of example but not in any limitative sense. In the following, the mixtures containing Y as dopant represent examples according to the present invention. The mixtures containing other rare earth elements as dopants represent comparative examples.

### Experimental procedure

All initial starting powders were of purity > 99%. The raw materials were weighed in the appropriate quantities to form the compositions required. Deionised water or propan-2-ol was added to the weighed batches which were subsequently ball milled with magnesia stabilised zirconia milling media for 16 hours. Alternatively, the materials were attrition milled for 2 hours with zirconia media. Subsequently, the raw material batches were dried at 80°C and sieved through a 250µm nylon mesh. The dried powder was calcined at temperatures in the interval 1150°C to 1350 °C for 2 to 16 hours. The as-calcined powders were re-milled with 2 wt% PEG binder (MW 10000) for 8 hours, dried and sieved. Standard test samples of 9.2g weight were uniaxially pressed in a 20 mm hardened stainless steel die using a pressure of ∼150 MPa. Sintering of the pellets was performed between 1350 and 1600°C for 1 to 48 hours under either an air or oxygen atmosphere. All samples were of density > 95% theoretical density using the Archimedes water immersion technique.

The electrical properties were tested on the sintered components. Microwave dielectric properties were measured in reflection using the TE0Iδ mode in a cubic silver plated cavity. TCf measurements were made in the interval +80°C to -20°C with the values of 60, 20 and - 10°C being used to calculate TCf. εᵣ measurements were made using the parallel plate transmission technique of Hakki and Coleman.

### EXAMPLE 1:

### Molar ratios required for useful TCf materials:

Data for mixtures of CaTiO₃ (CT) and Sm_{0.95}Y_{0.05}AlO₃ (SYA) plus 0.2 wt% CeO₂ as excess, aiming for a TCf between +6 and -3 MK⁻¹ were as shown in Table 1:

**Table 1**

| Material | Density / g cm⁻³ | f / GHz | εᵣ | Q | Qf / GHz | TCf / MK⁻¹ |
|---|---|---|---|---|---|---|
| 0.69 CT - 0.31 SA | 4.84 | 2.72 | 44.5 | 16000 | 43500 | 2.3 |
| | | | | | | |
| 0.7 CT - 0.3 SYA | 4.80 | 2.68 | 45.2 | 15700 | 42000 | 6.4 |
| 0.69 CT - 0.31 SYA | 4.82 | 2.71 | 44.1 | 15700 | 42500 | 1.7 |
| 0.68 CT - 0.32 SYA | 4.86 | 2.75 | 43.1 | 15800 | 43200 | -3.1 |

| | | | | | | |
|---|---|---|---|---|---|---|
| SA denotes SmAlO₃. | | | | | | |

Data for mixtures of CaTiO₃ (CT) and Sm_{0.95}Pr_{0.05}AlO₃ (SPA) plus 0.2 wt% CeO₂ as excess, aiming for a TCf between +6 and -3 MK⁻¹ were as shown in Table 2:

**Table 2**

| Materials | Density / g cm⁻³ | f / GHz | εᵣ | Q | Qf / GHz | TCf / MK⁻¹ |
|---|---|---|---|---|---|---|
| 0.7 CT - 0.3 SPA | 4.80 | 2.71 | 44.6 | 15600 | 41600 | 7.1 |
| 0.69 CT - 0.31 SPA | 4.83 | 2.67 | 44.4 | 15600 | 42300 | 2.3 |
| 0.68 CT - 0.32 SPA | 4.87 | 2.71 | 44.4 | 15800 | 43200 | -2.6 |

Data for mixtures of CaTiO₃ (CT) and Sm_{0.95}Dy_{0.05}sAlO₃ (SDA) plus 0.2 wt% CeO₂ as excess, aiming for a TCf between +6 and -3 MK⁻¹ were as shown in Table 3:

**Table 3**

| Material | Density / g cm⁻³ | f / GHz | εᵣ | Q | Qf / GHz | TCf / MK⁻¹ |
|---|---|---|---|---|---|---|
| 0.7 CT - 0.3 SDA | 4.82 | 2.68 | 45.2 | 15400 | 41100 | 7.1 |
| 0.69 CT - 0.31 SDA | 4.85 | 2.71 | 44.3 | 15400 | 41600 | 2.2 |
| 0.68 CT - 0.32 SDA | 4.88 | 2.74 | 43.2 | 15500 | 42300 | -2.3 |

Data for mixtures of CaTiO₃ (CT) and Sm_{0.95}Gd_{0.05}AlO₃ (SGA) plus 0.2 wt% CeO₂ as excess, aiming for a TCf between +6 and -3 MK⁻¹ were as shown in Table 4:

**Table 4**

| Material | Density / g cm⁻³ | f / GHz | εᵣ | Q | Qf / GHz | TCf / MK⁻¹ |
|---|---|---|---|---|---|---|
| 0.7 CT - 0.3 SGA | 4.82 | 2.67 | 45.3 | 12500 | 33400 | 6.3 |
| 0.69 CT - 0.31 SGA | 4.85 | 2.71 | 44.2 | 12500 | 33700 | 1.6 |
| 0.68 CT - 0.32 SGA | 4.88 | 2.74 | 43.2 | 12500 | 34100 | -3.1 |

The influence of the rare earth ion upon properties was summarised as shown in Table 5. Composition: 0.69 CaTiO₃ + 0.31Sm_{0.95}Re_{0.5}AlO₃ with 0.2 wt% excess CeO₂

**Table 5**

| Re | Density / g cm⁻³ | f / GHz | εᵣ | Q | Qf / GHz | TCf / MK⁻¹ |
|---|---|---|---|---|---|---|
| La₂O₃ | 4.82 | 2.71 | 44.7 | 15900 | 42900 | 2.7 |
| Y₂O₃ | 4.82 | 2.71 | 44.1 | 15700 | 42500 | 1.7 |
| Pr₆O₁₁ | 4.83 | 2.67 | 45.5 | 15600 | 42300 | 2.3 |
| Dy₂O₃ | 4.85 | 2.71 | 44.3 | 15400 | 41600 | 2.2 |
| Gd₂O₃ | 4.85 | 2.71 | 44.2 | 12500 | 33700 | 1.6 |

### EXAMPLE 2:

Influence of rare earth ion concentration upon dielectric properties.

The following data was generated for the composition:

0.69 CaTiO₃ + 0.31 Sm₂Re_{(1-z)}AlO₃

Results using Y₂O₃ as a substituent for Sm₂O₃ are as shown in Table 6.

**Table 6**

| z | Density / g cm⁻³ | f / GHz | εᵣ | Q | Qf / GHz | TCf / MK⁻¹ |
|---|---|---|---|---|---|---|
| 1 | 4.84 | 2.72 | 44.5 | 16000 | 43500 | 2.3 |
| 0.99 | 4.83 | 2.72 | 44.5 | 16000 | 43400 | 2.4 |
| 0.975 | 4.82 | 2.72 | 44.4 | 16000 | 43500 | 2.3 |
| 0.95 | 4.80 | 2.72 | 44.3 | 16100 | 43700 | 2.2 |
| 0.9 | 4.77 | 2.72 | 44.2 | 16300 | 44400 | 1.7 |
| 0.8 | 4.72 | 2.72 | 43.8 | 16800 | 45600 | 1.1 |
| 0.6 | 4.62 | 2.73 | 43.0 | 17100 | 46600 | -0.4 |
| 0.4 | 4.52 | 2.73 | 42.5 | 16800 | 45800 | -1.4 |
| 0.2 | 4.40 | 2.75 | 39.1 | 7600 | 20800 | -49.0 |
| 0 | 4.27 | 2.79 | 37.7 | 1200 | 3400 | |

Results using Pr₆O₁₁ as a substituent for Sm₂O₃, with 0.2 wt% CeO₂ as excess are shown in Table 7.

**Table 7**

| z | Density / g cm⁻³ | f / GHz | εᵣ | Q | Qf / GHz | TCf / MK⁻¹ |
|---|---|---|---|---|---|---|
| 1 | 4.84 | 2.72 | 44.5 | 16000 | 43500 | 2.3 |
| 0.95 | 4.83 | 2.71 | 44.4 | 15600 | 42300 | 2.3 |
| 0.9 | 4.83 | 2.70 | 41.6 | 15600 | 42000 | 2.7 |
| 0.85 | 4.83 | 2.69 | 41.6 | 15400 | 41500 | 3.2 |

Results using La₂O₃ as a substituent for Sm₂O₃ are shown in Table 8.

**Table 8**

| z | Density / g cm⁻³ | f / GHz | εᵣ | Q | Qf / GHz | TCf / MK⁻¹ |
|---|---|---|---|---|---|---|
| 1 | 4.84 | 2.72 | 44.5 | 16000 | 43500 | 2.3 |
| 0.99 | 4.82 | 2.72 | 44.5 | 16000 | 43500 | 2.4 |
| 0.975 | 4.82 | 2.71 | 44.5 | 16000 | 43200 | 2.4 |
| 0.95 | 4.82 | 2.71 | 44.7 | 15900 | 42900 | 2.7 |
| 0.9 | 4.81 | 2.70 | 44.9 | 15700 | 42300 | 3.1 |
| 0.8 | 4.81 | 2.69 | 45.4 | 15100 | 40600 | 4.3 |

### EXAMPLE 3

Influence of dopants upon the dielectric properties.

The following data was generated for the composition 0.69 CaTiO₃ + 0.31 ReAlO₃ as shown in Table 9.

**Table 9**

| Re | Dopant | Density / g cm⁻³ | f / GHz | εᵣ | Q | Qf / GHz | TCf / MK⁻¹ |
|---|---|---|---|---|---|---|---|
| Sm_{0.8}Y_{0.3} | Nil | 4.72 | 2.72 | 43.8 | 16800 | 45600 | 1.1 |
| Sm_{0.8}Y_{0.2} | 0.2 wt % CeO₂ as excess | 4.73 | 2.72 | 43.6 | 16500 | 44900 | 0.3 |
| | | | | | | | |
| Sm_{0.96}Y_{0.05} | Nil | 4.80 | 2.72 | 44.3 | 16100 | 43700 | 2.2 |
| Sm_{0.95}Y_{0.05} | 0.01 mol Ga₂O₃ on Ti site | 4.82 | 2.74 | 43.6 | 15600 | 42700 | 0.4 |
| Sm_{0.95}Y_{0.05} | 0.2 wt% Ga₂O₃ as excess | 4.83 | 2.72 | 44.4 | 15600 | 42400 | 2.4 |
| Sm_{0.95}Y_{0.05} | 0.2 wt% Fe₂O₃ as excess | 4.83 | 2.71 | 44.5 | 15000 | 40800 | 2.6 |
| Sm_{0.95}Y_{0.05} | 0.2 wt% MnO₂ as excess | 4.83 | 2.71 | 44.3 | 14700 | 39900 | 2.0 |
| Sm_{0.95}Y_{0.05} | 0.2 wt% Ta₂O₅ as excess | 4.84 | 2.72 | 44.4 | 15600 | 42500 | 2.1 |
| Sm_{0.95}Y_{0.05} | 0.2 wt% Nb₂O₅ as excess | 4.83 | 2.71 | 44.6 | 15600 | 42300 | 2.2 |

All data is provisional and based upon non optimised dopant concentrations and firing conditions.

### EXAMPLE 4

Sintering time and temperature reduction.

The following data was generated for the composition 0.69 CaTiO₃ + 0.31 Sm_{0.8}Y_{0.2}AlO₃ as shown in Table 10.

**Table 10**

| Sinter T / t | Density / g cm⁻³ | f / GHz | εᵣ | Q | Qf / GHz | TCf / MK⁻¹ |
|---|---|---|---|---|---|---|
| 1425 / 8 | 4.66 | 2.74 | 42.6 | 15800 | 43300 | 1.8 |
| 1450 / 8 | 4.73 | 2.72 | 43.9 | 16600 | 45100 | 1.4 |
| 1475 / 8 | 4.72 | 2.72 | 43.8 | 17000 | 46300 | 1.2 |
| 1500 / 8 | 4.72 | 2.72 | 43.8 | 16800 | 45600 | 1.1 |
| 1525 / 8 | 4.76 | 2.72 | 43.8 | 16400 | 44700 | 1.0 |
| | | | | | | |
| 1450 / 24 | 4.75 | 2.72 | 44.0 | 16800 | 45600 | 1.2 |
| 1500 / 2 | 4.70 | 2.72 | 43.4 | 16300 | 44500 | 1.3 |

where T denotes temperature in °C and t denotes time in hours

The following data was generated for the composition 0.69 CaTiO₃ + 0.31 Nd_{0.95}Sm_{0.05}AlO₃ + 0.2 wt% CeO₂ as a comparison to the above as shown in Table 11.

**Table 11**

| Sinter T / t | Density / g cm⁻³ | f / GHz | εᵣ | Q | Qf / GHz | TCf / MK⁻¹ |
|---|---|---|---|---|---|---|
| 1425 / 8 | 4.78 | 2.68 | 45.5 | 15100 | 40400 | 1.8 |
| 1450 / 8 | 4.81 | 2.69 | 45.5 | 15500 | 41800 | 1.0 |
| 1475 / 8 | 4.81 | 2.69 | 45.5 | 15800 | 42400 | 0.9 |
| 1530 / 8 | 4.78 | 2.69 | 45.3 | 15700 | 42400 | 0.8 |

where T denotes temperature in °C and t denotes time in hours

## Claims

1. A dielectric ceramic material with a composition of Formula (2) or (3)
xCaTi_{1.03}O₃+(1-x) Sm_{0.95}Y_{0.05}AlO₃ (2)
wherein 0.65 ≤ x ≤ 0.72, or
xCaTi_{1.03}O₃+(1-x) Sm_{0.8}Y_{0.2}AlO₃ (3)
wherein 0.65 ≤ x ≤ 0.72.

2. A dielectric ceramic material as claimed in claim 1, wherein Sr, Mg or a mixture thereof are substituted for Ca in an amount of 0 to 20 mol%.

3. A dielectric ceramic material as claimed in any preceding claim including a dopant, wherein the dopant is selected from the group consisting of: CeO₂, Nb₂O₅ and Ga₂O₃, and mixtures thereof, wherein the total amount of dopant is from 20 ppm to 2 wt%.

4. A dielectric ceramic material as claimed in claim 3, wherein CeO₂ is added as a dopant in the range 50 ppm to 2.0wt%.

5. A dielectric ceramic material as claimed in any preceding claim wherein the cation site occupancy of Ca, Ti, Y and Al is varied by ±10%.

6. A dielectric resonator comprising a dielectric ceramic material as claimed in any preceding claim.

## Patentansprüche

1. Dielektrisches Keramikmaterial mit der Zusammensetzung der Formel (2) oder (3)
xCaTi_{1,03}O₃+(1-x) Sm_{0,95}Y_{0,05}AlO₃ (2)
wobei 0,65 ≤ x ≤ 0,72 oder
xCaTi_{1,03}O₃+(1-x) Sm_{0,8}Y_{0,2}AlO₃ (3)
wobei 0,65 ≤ x ≤ 0,72.

2. Dielektrisches Keramikmaterial nach Anspruch 1, wobei Ca in einer Menge von o bis 20 Mol-% durch Sr, Mg oder eine Mischung davon ersetzt ist.

3. Dielektrisches Keramikmaterial nach einem der vorhergehenden Ansprüche, das ein Dotierungsmittel enthält, wobei das Dotierungsmittel aus der Gruppe bestehend aus CeO₂, Nb₂O₅ und Ga₂O₃ und Mischungen davon ausgewählt ist, wobei die Gesamtmenge an Dotierungsmittel 20 ppm bis 2 Gew.-% beträgt.

4. Dielektrisches Material nach Anspruch 3, wobei CeO₂ als Dotierungsmittel im Bereich von 50 ppm bis 2,0 Gew.-% zugegeben ist.

5. Dielektrisches Keramikmaterial nach einem der vorhergehenden Ansprüche, bei dem die Kationenstellenbesetzung von Ca, Ti, Y und Al um ±10 % variiert ist.

6. Dielektrischer Resonator, umfassend ein dielektrisches Keramikmaterial nach einem der vorhergehenden Ansprüche.

## Revendications

1. Matériau céramique diélectrique avec une composition de formule (2) ou (3)
xCaTi_{1,03}O₃+(1-x)Sm_{0,95}Y_{0,05}AlO₃ (2)
dans laquelle 0,65 ≤ x ≤ 0,72, ou
xCaTi_{1,03}O₃+(1-x)Sm_{0,8}Y_{0,2}AlO₃ (3)
dans laquelle 0,65 ≤ x ≤ 0,72.

2. Matériau céramique diélectrique selon la revendication 1, dans lequel Sr, Mg ou un mélange de ceux-ci remplace Ca dans une quantité de 0 à 20 % en moles.

3. Matériau céramique diélectrique selon une quelconque revendication précédente comportant un dopant, le dopant étant choisi dans le groupe constitué par : CeO₂, Nb₂O₅ et Ga₂O₃, et les mélanges de ceux-ci, la quantité totale de dopant étant de 20 ppm à 2 % en poids.

4. Matériau céramique diélectrique selon la revendication 3, dans lequel CeO₂ est ajouté comme dopant dans la gamme de 50 ppm à 2,0 % en poids.

5. Matériau céramique diélectrique selon une quelconque revendication précédente dans lequel on fait varier l'occupation des sites cationiques de Ca, Ti, Y et Al de ±10 %.

6. Résonateur diélectrique comprenant un matériau céramique diélectrique selon une quelconque revendication précédente.
